Europäisches Patentamt

**European Patent Office**

**Office européen des brevets**

(11) Publication number: **0 133 904**
A2

# EUROPEAN PATENT APPLICATION

(21) Application number: **84107541.9**

(22) Date of filing: **29.06.84**

(51) Int. Cl.⁴: **B 01 D 23/26,** B 01 D 23/20

(30) Priority: **30.06.83 ZA 834780**

(43) Date of publication of application: **13.03.85**
**Bulletin 85/11**

(84) Designated Contracting States: **AT BE CH DE FR GB IT**
**LI LU NL SE**

(71) Applicant: **BLUE CIRCLE PROJECTS (PROPRIETARY)**
**LIMITED, Corner Blackreef and Moore Streets,**
**Germiston Transvaal Province (ZA)**

(72) Inventor: **Moore, Richard Piermont, Corner Blackreef &**
**Moore Streets, Germiston Transvaal Province (ZA)**

(74) Representative: **Patentanwälte Beetz sen. - Beetz jun.**
**Timpe - Siegfried - Schmitt-Fumian,**
**Steinsdorfstrasse 10, D-8000 München 22 (DE)**

(54) Method for controlling the operation of rapid gravity operated filters.

(57) This invention relates to the operating of a plurality of rapid gravity filters so that each filter passes the same volume of liquid and the total volume passed by the bank of filters exactly equals the total flow of liquid being received by the filters with the top water levels of all filters automatically maintained regardless of how the flow being delivered to the filters varies or the loss of head through the filters varies, by the provision for each filter of a pilot controlled main valve (9) on the filter outlet discharged into a weir chamber (5), a float buoyant on the level of the liquid in the weir chamber (5) and activating the pilot control of the main valve (9) in accordance with the level of liquid in the filter outlet chamber (4) so that at a specific liquid level the main valves (9) on each filter will be throttled to control the outgoing flow and remotely controlling the buoyancy or level of the floats in all the discharge chamber (4) simultaneously in accordance with the level of the liquid in the main liquid delivery channel (1) to the filters so that the pilot controls of the main valves are all equally activated at a liquid level above the filter outlet weirs corresponding to a specific flow.

0133904

METHOD FOR CONTROLLING THE OPERATION OF RAPID
GRAVITY OPERATED FILTERS

THIS INVENTION relates to the control of rapid gravity operated filters.

In the control of flow through rapid filters by the upstream method, the flow through the filter outlet is paced in accordance with the flow into the filter. This may be effected by sensing the top operating water level and controlling the flow through the outlet valve of the filter directly in accordance therewith. In this specification "water" is to be understood to include other liquids which are required to be filtered.

This invention relates more particularly to the control of a plurality of such filters and it is desired to divide the incoming flow equally between all filters regardless of variation in loss of head through the separate filters, and to maintain upstream water levels and flow through the

/...

filters equally divided between all filters in operation and paced exactly the same as the flow fed to the filters.

It is the object of this invention to provide the method and means which will achieve the criteria set out above to a satisfactory practical degree.

According to this invention there is provided a method of controlling the flow through a plurality of rapid quavity filters by sensing the water level of the incoming common filter feed launder and utilizing this to jointly and equally vary the effect to a float located on a weir outlet chamber of each filter so that the delivering from each filter is the same and the total delivery exactly equal to the incoming flow. Further the invention provides that the effect to the floats serves to pace the rate of a rate of flow control system located on the outlet of each filter and which serves to compensate for loss of head in the filter operation and the invention includes two alternative types of flow control systems specifically devised to be paced by the variable effect floats.

/...

In one form of the invention the rake of flow control system would comprise a main valve controlling the outlet of each filter, of a special diaphragm type the opening and closing on operation of which is effected by the introduction or removal of liquid from its diaphragm operating compartment in turn controlled by a pilot pinch valve motivated by the variable effect float responsive to the outlet weir chamber water level with the variable effect pacing or setting the rate of flow.

In another form of the invention the weir outlet from each filter chamber would be variable in vertical height and would be suspended from a variable effect float. The variable effect on the float paving on setting the rake of flow equally from all filters in accordance with the incoming flow.

Further features of this invention provide for the effect on the floats in the outlet chambers to be varied by varying the buoyancy thereof and for the buoyancy to be varied by the introduction or discharge of water into and out of the floats with variation in incoming water levels.

The invention also provides for the level of incoming flow to be sensed by a float located therein and for the float to operate a control valve for the introduction or discharge of water from the floats in the filter discharge chambers.

The level of water of the incoming flow thus varies the buoyancy of all the floats in the filter outlet chambers equally and the effect of this will be:- for a raise in level or increased flow, increased loading of the floats and increased flow from the filter outlets and for a fall in level reduced loading of the variable effect floats and reduced outlet flow.  This enables the discharge from the filter outlets to be individually but jointly controlled to provide equal discharge from each filter in accordance with the total filter inlet flow..

The invention also provides for various systems for transmitting the incoming water level information into means for jointly loading and unloading the variable effect floats.

In one system compressed air is utilised to displace or allow loading water to enter the floats. In another system direct float operation from the incoming water level may control a loading water pilot valve for direct gravity liquid loading of the variable effect floats.

In still another system the incoming level information may be electrically transmitted to motivate pilot valves controlling either of the above systems.

BRIEF DESCRIPTION OF THE DRAWINGS

Preferred embodiments of this invention are described below with reference to the accompanying diagrammatic drawings in which

Fig. 1 illustrates the principle of operation applied to each separate filter outlet

Fig. 2 illustrates the interconnection of floats in all filter outlet chambers through the incoming flow level control

/...

0133904

Fig. 3 illustrates an alternative method of varying the buoyancy of the floats and

Fig. 4 a diaphragm valve suitable for controlling the outlets from the filters.

Fig. 5 an alternative filter outlet control system in which a variable weir is employed.

DETAILED DESCRIPTION OF THE INVENTION

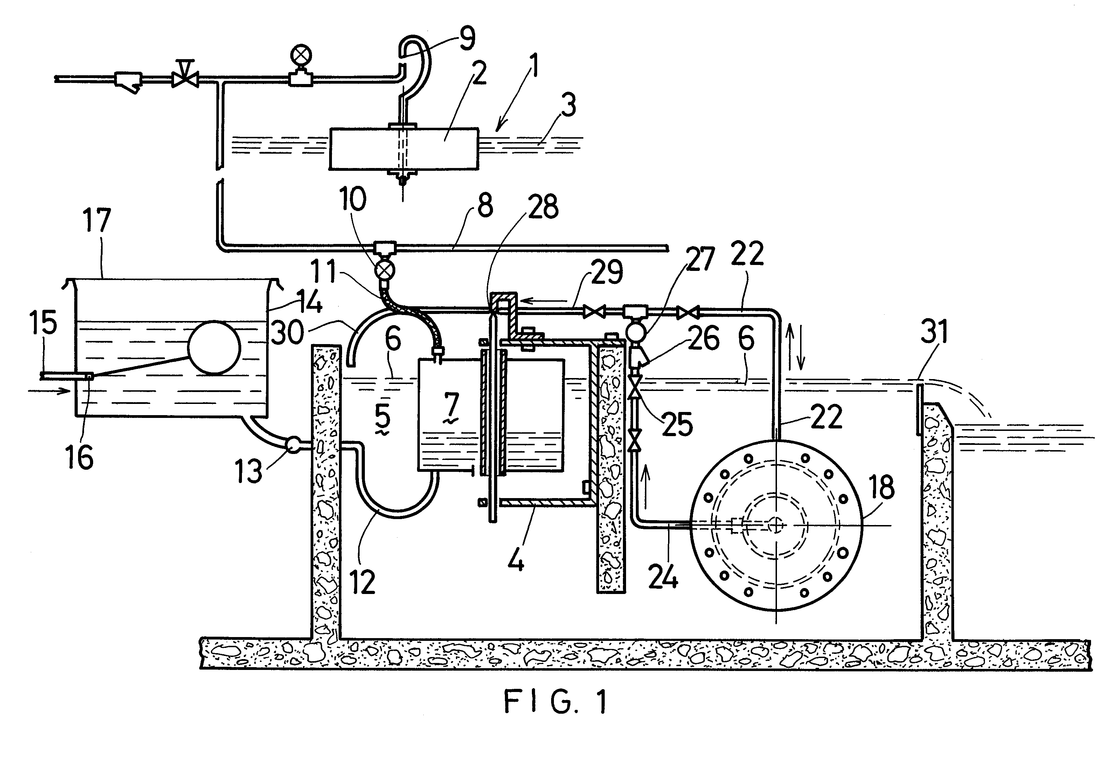

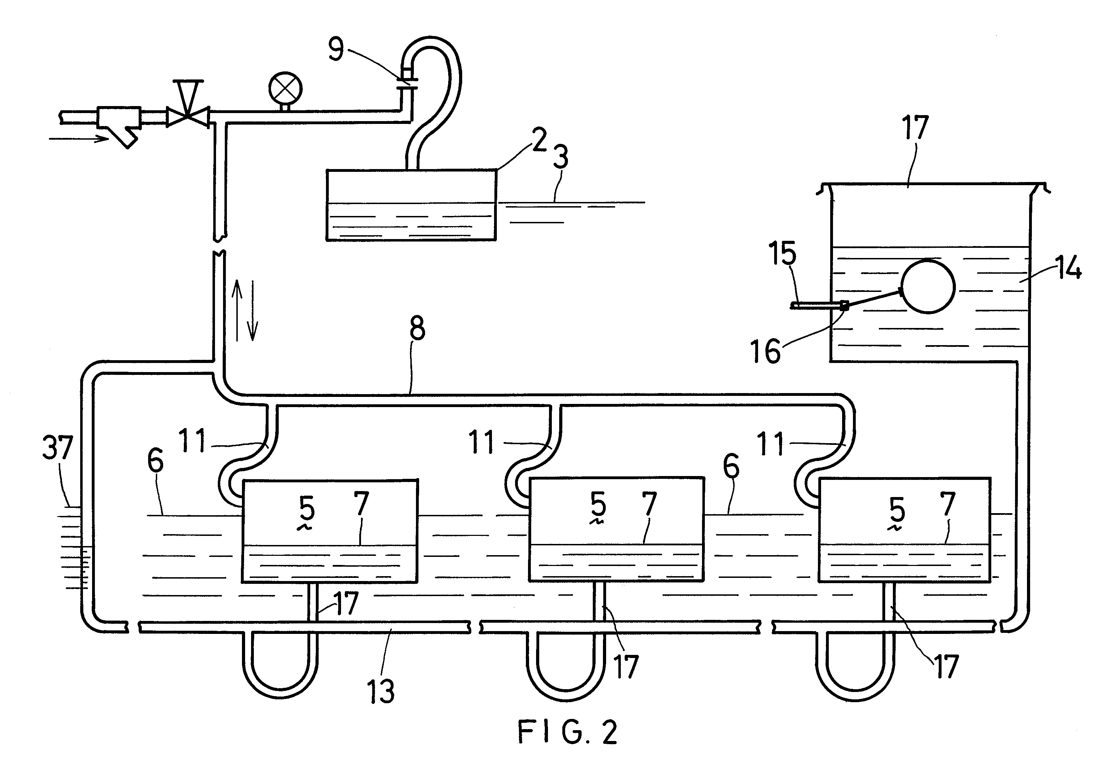

Referring to Figs. 1 and 2 there is indicated a plurality of rapid gravity filters to be fed from a common incoming feed launder 1 wherein a control float 2 is located and the water level indicated at 3.

Each discharge chamber 4 from each filter has a float 5 supported therein for vertical movement dependant on the level 6 of water in the discharge chamber and the buoyancy of the float 5. The buoyancy may be varied by the introduction of water into and out of the float, the level of the water in the float is indicated at 7.

To control the buoyancy of the floats 5 a supply of compressed air at a low pressure is provided and controlled by the main float 2 located at and sensing the level of the main incoming feed launder to the filters 4. A dual acting pilot valve 9 connects through a pneumatic conduit 8 to each of the weir chamber floats 5 and the valve 9 operates to admit or exhaust air from each of the weir chamber floats 5 simultaneously, thus simultaneously and equally loading or unloading each weir float, any increase in pressure causing water to be expelled back into a holding tank and any reduction in pressure allowing water to enter the interior of the floats.

Pneumatic conduit 8 is a common header connecting via normally open valves 10 and flexible conduits 11 into the enclosed interior of floats 5 (see also Fig. 2) the interiors of which are also connectd at a low level with flexible water loading conduits 12 in turn connecting to water header 13 fed by gravity from water holding tank 14 provided with automatic make up via water supply conduit 15 and complimentary float operated valve 16. Water holding tank 14 serves to feed loading water into the interior of floats 5 when the internal pressure in the floats 5 is reduced due to the opening of pneumatic pilot valve 9 and conversely to receive loading water exhausted from floats 5 when the internal pressure in floats 5 is increased due to the closure or throttling of main pilot valve 9. The interior of tank 14 is open to atmosphere in this arrangement and has dust cover 17. In this method of operation the pneumatic supply will be provided through a suitable in line filter and needle bleed valve and no liquid is wasted. When the floats 5 are loaded a small volume of compressed air is discharged through the bleed valve to waste. The compressed air supply will also preferably include a pressure gauge.

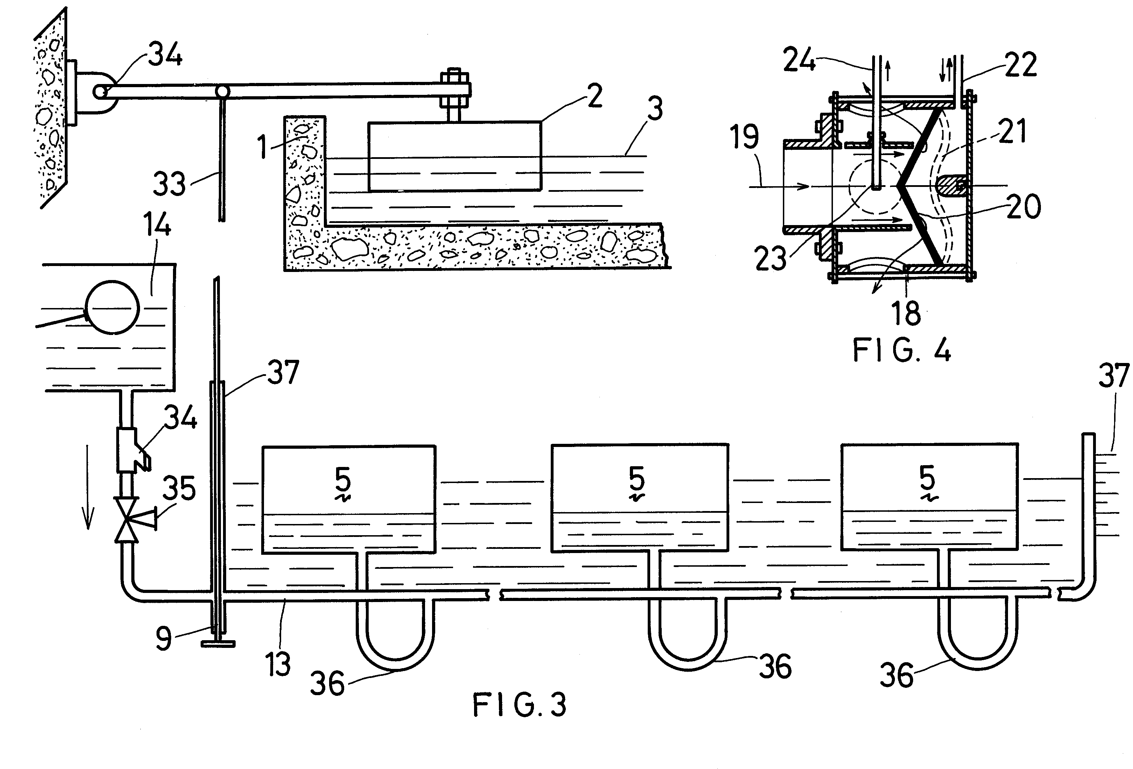

The effect of loading and unloading floats 5 is illustrated in Figs. 1 and 4 where 18 represents a diaphragm valve controlling the outlet conduits 19 of the individual filters. Conduit 19 is closed by the diaphragm 20 of valve 18 when diaphragm operating compartment 21 is filled with operating fluid via connection 22 and is opened by exhausting fluid from diaphragm operating compartment 21; a supply of operating fluid is obtained from conduit 19 via velocity head intake 23 and delivered via conduit 24, as shown in Fig. 1 via isolating valve 25, strainer 26 and needle or throttle valve 27 and conduit 22 to diaphragm operating compartment 21, when pinch valve 28 is closed. Because valve 27 is throttled, if pinch valve 28 is opened operating fluid will exhaust from diaphragm compartment 21 via conduits 22, 29 and 30 and main valve 18 will open.

Floats 5 are responsive to discharge chamber water levels 6 into which valve 18 discharges. Discharge chamber water levels 6 corresponds to the flow over weirs 31 or the flow through the outlet of each filter and is in turn dependent on the loading of floats 5, the loading of which in turn is controlled by the main filter feed launder water level 3.

If the flow over the weir increases, level 6 rises raising float 5 and throttling pinch valve 28 so that the diaphragm compartment 21 of valve 18 receives fluid and throttles conduit 19 which in turn causes level 6 to fall opening pinch valve 28 exhausting water from diaphragm compartment 21 and opening valve 18.

In practice, pinch valve 28 throttles just sufficiently to maintain the opening of valve 18 to provide a rate of flow corresponding to the loading of floats 5 in turn governed by the rate of flow reaching the filter inlet feed launder 1. In other words, the filter outlets are paced to pass in equal volumes exactly the flow being fed to the filters regardless of how this varies, or the loss of head through the filters. The system described comprises an automatic rate of flow controller on each filter outlet and since the setting of the rate of flow is determined by the loading of floats 5 and this loading is equal for all floats, the rate of flow is equally divided between all filters in operation.

In an alternative form of pneumatic loading as shown in Fig. 1 the interior of floats 5 would not be pressurised but would be open to atmosphere (preferably via a small orifice in their lids) and water loading tank 14 would be enclosed so that it may be pressurised by a connection from pneumatic conduit 8 which would then only connect to the upper interior of a pressurised tank 14 located at a level now below loading water level 7 in floats 5, so that when pressure is reduced in tank 14 as already described by the action of main pilot valve 9, loading water will gravitate out of floats 5 into tank 14 and be forced back into floats 5 by pneumatic pressure with the closure of pilot valve 9. In this instance increase in pressure loads the floats and decrease in pressure unloads the floats so that in fact the closure of main pilot valve 1 would now be effected by rise in water level 3 and vice versa.

Automatic stopping and starting of all filters in this arrangement can be effected by the provision of a suitable three-way valve (solenoid or otherwise operated) in the pneumatic conduit 8, so that in the operation position the pneumatic conduit 8 connects normally to tank 14 and in the other inoperative poisiton the valve exhausts the interior of tank 14 to atmosphere and closes off the pneumatic supply. Floats 5 would unload into tank 14 and there would be no expenditure of compressed air or water in the inoperation position.

A further alternative method of loading and unloading the floats 5 is illustrated in Fig. 3. This method may be used where compressed or is not available and a liquid loading system only is used. A supply of water under sufficient pressure to load the floats 5 is bled through a needle or throttle valve into a common main 13 with connections to all the floats 5. A main pilot control valve 9 motivated by a float 2 responsive to the level of liquid in the filter feed lauder 1 and connected into the common float loading main 13 at a low level, serves on opening with fall in level of the filter inlet lauder water level 3, to unload the floats 5 or when closed or throttled with rise in water level of the inlet lauder 1 causes the floats 5 to be loaded by the incoming liquid bleed.

Liquid loading of the floats causes the main outlet valve pilot control 28 to be motivated

/...

at a higher liquid level over the outlet weirs 31 corresponding to a higher flow through the filters and vice versa.

In a practical application the hydraulic loading of floats 5 the main pilot valve 9 controls the flow through float loading main 13 dependant on the level 3 in the intake feed lauder 1. The float 2 is connected to float arm 32 and connecting rod 33 pivotally mountd at 34.

Water in holding tank 14 now becomes loading water located high enough for its supply to gravitate into floats 5 via strainer 34 and throttle or needle valve 35, float loading main 13 and flexible connection 36 when main pilot valve 9 is throttled or closed. Unloading of floats 5 is effected by the exhaust of water to atmosphere with the opening of main pilot valve 9.

Exhaust water may be recovered by pumped recirculation.

The float loading level and consequently the total rate of flow through the filters may be

/...

indicated by calibrated sight glass 37 or instrument means sensing the loading level and transmitting this to a rate of flow indicator located as desired. Thus the main float operated pilot control actuated by the filter inlet lauder water level, assumes a throttled condition at which the loading of the floats is held at a level corresponding to the divided flow through all filters equalling the total flow to the filter inlet channel.

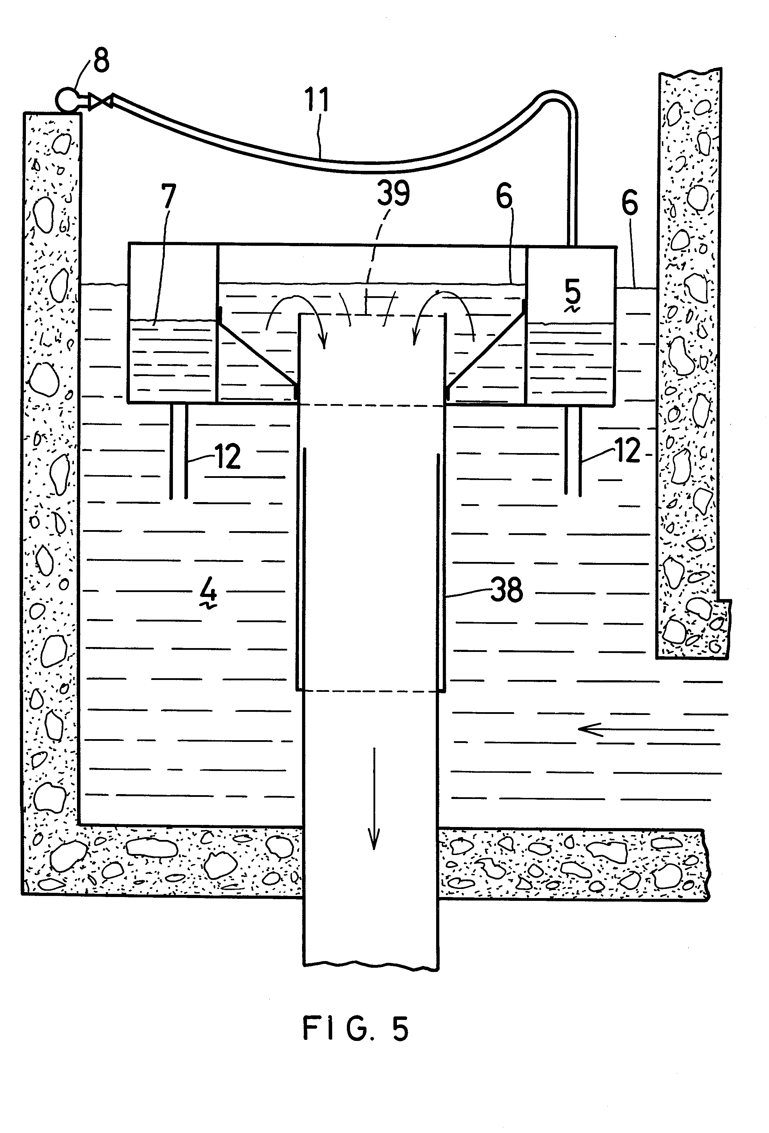

In Fig. 5 numeral 4 is the weir outlet chamber to the filters, 38 is a circular or square weir tube vertically slidable on an outlet conduit 40 and with a weir cill 39 the level of which is maintained an amount below weir chamber water level depending on the loading of variable loading annular float 5 the loading of which is effected by the admission or removal of liquid from weir chamber 4 through conduit 12 paced from the water level of the incoming common filter feed launder by a compressed air displacement system via headen conduit 8 and flexible conduit 11 as previously described.

/...

In all arrangements, the weirs of the
filter outlet chambers would have identical flow
characteristics and their sills at the same level.

0133904

1. A method of controlling the flow through a plurality of gravity filters comprising sensing the water level of the incoming common filter feed launder and utilising this level to equally and jointly vary the effect to a float located on a weir outlet chamber to each filter so that the delivery from each filter is the same and the total delivery equal to the incoming flow.

2. A method as claimed in claim 1 in which the effect of the floats are varied by varying the buoyancy thereof.

3. A method as claimed in claim 2 in which the buoyancy is varied by the introduction or discharge of water into or out of the floats.

/...

4. A method as claimed in claim 3 in which water is introduced or discharged from the floats under the influence of a compressed air supply controlled by a pilot valve operated by a float sensing the level of the incoming water.

5. A method as claimed in claim 4 in which the compressed air is introduced into each float in the filter discharge chambers which floats are connected in their lower regions to a water supply tank located above the height of the floats.

6. A method as claimed in claim 4 in which the compressed air is introduced into a pressure supply tank of water connected to the lower regions of the floats in the filter outlet chambers which floats are open to atmosphere through apertures in their upper regions.

7. A method as claimed in claim 3 in which the water is introduced into the floats

/...

from a water supply tank located at a level substantially above the floats and discharged from the system when the buoyancy is to be increased.

8.   A method as claimed in claim 4 in which the water supply for loading the variable effect floats is obtained from the weir chamber in which the floats are located.

9.   A method as claimed in claim 1 in which the effect to the variable effect floats serves to pace the rate of a rate of flow control system located on the outlet of each filter and which serves to compensate for loss of head in the filter operation.

10.   A method as claimed in claim 9 in which the rate of flow control system uses diaphragm valves to control the main outlets from the filter.

/...

11. A method as claimed in claim 10 in which a pinch cock is used as the pilot valve for the main diaphragm valve operating on a connection extending from the diaphragm operating compartment of the main valve.

12. A method as claimed in claim 9 in which the rate of flow control system includes a vertically movable weir suspended by and movable by a variable effect float or floats responsive to the water level in the weir chamber so as to maintain the weir cill a set distance below the water level and in which this set distance is varied in accordance with the water level or incoming flow to the common filter inlet feed launder.

13. A method as claimed in claim 1 in which total flow through all filters is indicated sensing the liquid loading level of the variable effect floats.

0133904

14. A method as claimed in claim 1 in which the flow through all filters is simultaneously arrested by the draining of all variable effect floats and restored by the readmittance of control liquid into the variable effect floats.

15. A method substantially as described with reference to Figs. 1 and 2 or 3 of the accompanying drawings.

FIG. 1

FIG. 2

0133904

FIG. 3

FIG. 4

0133904

FIG. 5